# EUROPEAN PATENT SPECIFICATION

(11) **EP 3 426 894 B1**
(45) Date of publication and mention of the grant of the patent: **17.06.2020**
(21) Application number: 16710608.7
(22) Date of filing: 07.03.2016
(51) Int. Cl.: F01D 5/08, F01D 25/12, F02C 7/18

(54) **TURBINE LAST STAGE ROTOR BLADE WITH FORCED DRIVEN COOLING AIR**
LETZTSTUFENROTORBLATT EINER TURBINE MIT ZWANGSANGETRIEBENER KÜHLLUFT
PALE DE ROTOR DE DERNIER ÉTAGE DE TURBINE AVEC AIR DE REFROIDISSEMENT ENTRAÎNÉ À FORCE

(43) Date of publication of application: 16.01.2019
(73) Proprietor: Florida Turbine Technologies, Inc., Jupiter, Florida 33458 (US)
(72) Inventor: BROSTMEYER, Joseph D., Jupiter, Florida 33477 (US)
(74) Representative: Valea AB
(86) International application number: PCT/US2016/021217
(87) International publication number: WO 2017/155506

(56) References cited:
- EP-A1- 1 249 578
- EP-A2- 2 584 142
- GB-A- 2 057 573
- US-B1- 6 276 896
- US-B1- 7 677 048
- US-B1- 8 668 437

## Description

### TECHNICAL FIELD

The present invention relates to a gas turbine engine, and more specifically to cooling of the turbine blades in the turbine section of the engine.

### BACKGROUND

Gas turbine engines include stationary vanes and rotating blades in the turbine section that have cooling fluid passages therein. The cooling fluid is usually air, and the supply for cooling air is usually from the compressor of the gas turbine engine. In an industrial gas turbine engine such as the large frame heavy duty engines used for electric power production, the first, second, and third stage turbine blades are usually cooled by air supplied from the compressor at various pressures. The cooling air is exhausted to the gas stream from cooling holes in the blades. The first stage blade operates under high pressures, and therefore requires a cooling fluid supply having such a pressure that the flow can be exhausted into the gas stream. The second and third stage blades also required compressed cooling air in order to exhaust the cooling air into the gas stream. The last stage blade operates under the lowest gas stream pressure, and therefore requires the lowest cooling air pressure of all the stages. Using compressed air supplied from the compressor for the last stage blades wastes compressed air and decreases the overall efficiency of the turbine engine.

U.S. Pat. No. 7,677,048 issued to Brostmeyer et al. on March 16, 2010, and entitled TURBINE LAST STAGE BLADE WITH FORCED VORTEX DRIVEN COOLING AIR discloses a turbine with a last stage rotor blade having a cooling air passage and a cover plate having a plurality of blades that is secured over a side of the rotor disk. Rotation of the rotor also rotates the cover plate and the blades within that draw air from ambient and forces the cooling air through the blade air passage for cooling of the blade. However, this design does not produce enough pressure in the cooling air to provide adequate cooling for the last stage rotor blades of the turbine. Also documents EP2584142A2 and US8668437B1 show gas turbines with cooled rotor arrangements.

### SUMMARY

The present invention is directed to a gas turbine engine as defined by appended independent claim 1, in which inter alia the last stage row of blades is cooled by driving cooling air through the blades, where the cooling air is supplied from the ambient air outside of the turbine and pumped through the blade by a centrifugal force (forced vortex flow) applied to the cooling air flow by the rotation of the blade row, or with the aid of an impeller that is secured to a rotor disk of the last stage rotor and blade assembly that also rotates with the last stage row of blades. The impeller is a centrifugal compressor with an axial inlet and a radial outlet and draws ambient pressure air into the inlet and compresses the air and discharges the compressed air into a rim cavity, where the compressed air then flows into a cooling air passage formed within the last stage rotor blade for cooling. The cooling air is then exhausted into the gas stream of the turbine engine.

### BRIEF DESCRIPTION OF THE DRAWINGS

Figure 1 shows a cross section view of a last stage rotor blade of a turbine with a centrifugal compressor secured to the rotor disk according to the present invention; and
Figure 2 shows a cross section view of an industrial gas turbine engine driving an electric generator.

### DETAILED DESCRIPTION

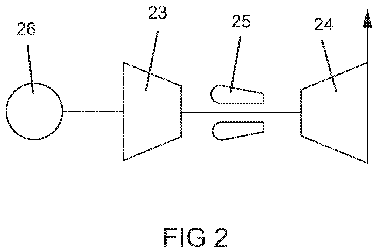

A gas turbine engine includes a plurality of stages in the turbine section, each stage including a stationary vane to direct the gas stream onto a stage of rotating blades. It is usual to provide for cooling air passages in the first, second, and third stages of the turbine to cool the vanes and blades. The last or fourth stage of the turbine is sometimes not cooled with air passing through the vanes or blades because the gas stream temperature has dropped low enough such that cooling is not needed. Figure 2 shows an industrial gas turbine engine with a compressor 23 connected to a turbine 24, a combustor 25, and an electric generator 26 connected to the compressor end of the engine.

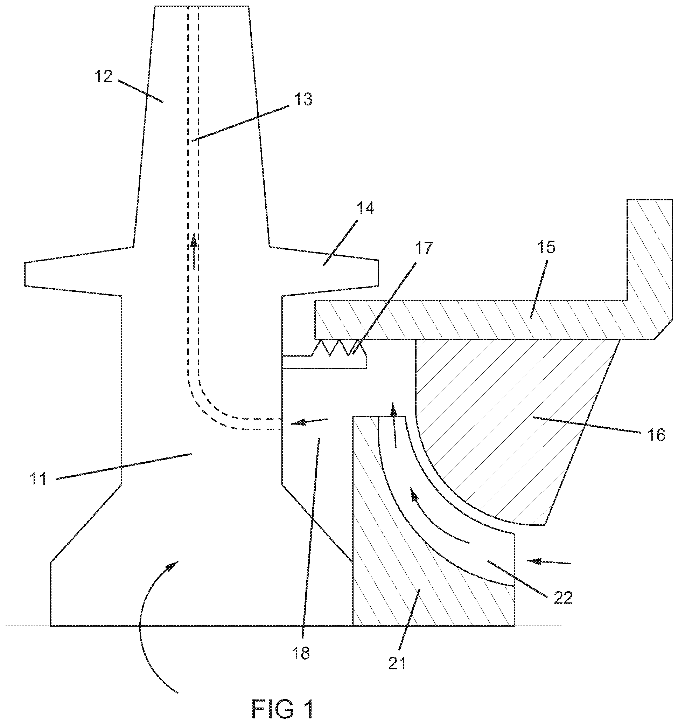

The gas turbine engine in Figure 1 shows the present invention, which is solely defined by appended independent claim 1, and includes a rotor 11 with a blade 12 extending outward to form a last stage of a turbine of a gas turbine engine, an internal cooling air passage 13 with an inlet opening into a rim cavity 18 and an outlet discharging through a blade tip of the blade, a platform 14, a static casing 15, and labyrinth seal 17 extending from the rotor 11 and forming a seal with the stationary casing 15, an impeller 21 with a blade 22, and a shroud 16 secured to the stationary casing 15 and enclosing the blades 22 of the impeller 21. The impeller 21 is secured to the rotor 11 so that both impeller 21 and rotor 11 rotate together.

The rotor blade 12 includes a cooling air circuit to provide cooling for the blade. The cooling circuit could be one or more straight radial flow channels or a complex cooling circuit with a serpentine flow cooling channel. Rotation of the rotor 11 also rotates the impeller 21 and thus forces cooling air from the ambient atmosphere and into the axial inlet when the air is compressed and discharged out the radial outlets and into the rim cavity 18. The compressed cooling air then enters the internal cooling passage 13 of the rotor blade where the compressed cooling air is forced up through the blade cooling air passage 13 due to rotation of the rotor blade 12. The cooling air can be discharged from the rotor blade at blade tip cooling holes or any other well-known airfoil discharge.

The impeller 21 also pressurizes the cooling air within the rim cavity 18, and thus prevents hot gas from the main stream flow from entering the rim cavity 18. Thus, the pressurized cooling air used for the cooling of the rotor blade 12 is also used to improve the labyrinth seal 17 for the rim cavity 18.

## Claims

1. A gas turbine engine comprising:
a turbine with a last stage rotor (11) and a last stage stator (15, 16);
a turbine rotor blade (12) extending from the last stage rotor;
a centrifugal impeller (21) secured to the last stage rotor, the centrifugal impeller including a blade (22);
a rim cavity (18) formed between the last stage rotor and the last stage stator;
a seal (17) formed between the last stage rotor and the last stage stator to form a seal between the rim cavity and a hot gas path through the turbine;
a cooling air channel (13) formed in the last stage rotor and the turbine rotor blade with an opening into the rim cavity (18), **characterized by**
the centrifugal impeller (21) being located on the last stage rotor such that rotation of the last stage rotor and centrifugal impeller discharges pressurized cooling air into the rim cavity (18) and then through the cooling air channel (13) formed in the last stage rotor (11) and turbine rotor blade (12).

2. The gas turbine engine of claim 1, wherein the cooling air channel (13) formed in the turbine rotor blade discharges at a blade tip.

3. The gas turbine engine of claim 1, wherein the seal (17) is a labyrinth seal.

4. The gas turbine engine of claim 1, wherein a shroud (16) is secured to the stationary casing and encloses blades of the centrifugal impeller.

## Patentansprüche

1. Gasturbinenmotor, umfassend:
eine Turbine mit einem Schlussstufenrotor (11) und einem Schlussstufenstator (15, 16);
eine Turbinenlaufschaufel (12), die sich von dem Schlussstufenrotor erstreckt;
ein Zentrifugenflügelrad (21), das an dem Schlussstufenrotor gesichert ist, wobei das Zentrifugenflügelrad eine Schaufel (22) beinhaltet;
eine Randaussparung (18), die zwischen dem Schlussstufenrotor und dem Schlussstufenstator gebildet ist;
eine Dichtung (17), die zwischen dem Schlussstufenrotor und dem Schlussstufenstator gebildet ist, um zwischen der Randaussparung und einem Heißgasbereich durch die Turbine hindurch eine Dichtung zu bilden;
einen Kühlluftkanal (13), der in dem Schlussstufenrotor und der Turbinenlaufschaufel gebildet ist, mit einer Öffnung in die Randaussparung (18) hinein, **dadurch gekennzeichnet, dass** sich das Zentrifugenflügelrad (21) an dem Schlussstufenrotor befindet, sodass eine Rotation des Schlussstufenrotors und des Zentrifugenflügelrads mit Druck beaufschlagte Kühlluft in die Randaussparung (18) und dann durch den in dem Schlussstufenrotor (11) gebildeten Kühlluftkanal (13) und die Turbinenlaufschaufel (12) abführt.

2. Gasturbinenmotor nach Anspruch 1, wobei der in der Turbinenlaufschaufel gebildete Kühlluftkanal (13) an einer Schaufelspitze abführt.

3. Gasturbinenmotor nach Anspruch 1, wobei die Dichtung (17) eine Labyrinthdichtung ist.

4. Gasturbinenmotor nach Anspruch 1, wobei ein Abdeckblech (16) an dem feststehenden Gehäuse gesichert ist und die Schaufeln des Zentrifugenflügelrads umschließt.

## Revendications

1. Turbine à gaz comprenant :
une turbine avec un rotor d'étage terminal (11) et un stator d'étage terminal (15, 16) ;
une pale de rotor de turbine (12) s'étendant depuis le rotor d'étage terminal ;
un rouet centrifuge (21) fixé au rotor d'étage terminal, le rouet centrifuge incluant une pale (22) ;
une cavité de bord (18) formée entre le rotor d'étage terminal et le stator d'étage terminal ;
un joint (17) formé entre le rotor d'étage terminal et le stator d'étage terminal pour former un joint entre la cavité de bord et un flux de gaz chaud à travers la turbine ;
un canal d'air de refroidissement (13) formé dans le rotor d'étage terminal et la pale de rotor de turbine avec une ouverture dans la cavité de bord (18), **caractérisée par le fait que** le rouet centrifuge (21) est situé sur le rotor d'étage terminal de sorte qu'une rotation du rotor d'étage terminal et d'un rouet centrifuge décharge de l'air de refroidissement sous pression dans la cavité de bord (18) et ensuite à travers le canal d'air de refroidissement (13) formé dans le rotor d'étage terminal (11) et une pale de rotor de turbine (12).

2. Turbine à gaz selon la revendication 1, dans laquelle le canal d'air de refroidissement (13) formé dans la pale de rotor de turbine décharge au niveau d'une extrémité de pale.

3. Turbine à gaz selon la revendication 1, dans laquelle le joint (17) est un joint labyrinthe.

4. Turbine à gaz selon la revendication 1, dans laquelle un talon (16) est fixé au carter fixe et enferme des pales du rouet centrifuge.
